# EUROPEAN PATENT APPLICATION

(11) **EP 3 544 104 A1**
(43) Date of publication of application: **25.09.2019**
(21) Application number: 16921597.7
(22) Date of filing: 16.11.2016
(51) Int. Cl.: H01M 8/18, H01M 8/02

(54) **CELL FRAME, CELL STACK, AND REDOX FLOW BATTERY**

(71) Applicant: Sumitomo Electric Industries, Ltd., Osaka-shi, Osaka 541-0041 (JP)
(72) Inventor: KANNO, Takashi, Osaka-shi Osaka 554-0024 (JP)
(74) Representative: Boult Wade Tennant LLP
(86) International application number: PCT/JP2016/083982
(87) International publication number: WO 2018/092216

(57) **Abstract**

A cell frame includes a bipolar plate and a frame body. The bipolar plate is in contact with an electrode included in a battery cell. The frame body surrounds a peripheral edge of the bipolar plate. The frame body has a liquid discharging manifold that allows an electrolyte to be discharged therethrough to an outside of the battery cell. The bipolar plate has a plurality of main grooves that are arranged in a surface of the bipolar plate on an electrode side and that allow the electrolyte to flow therethrough. At least one of the frame body and the bipolar plate has a liquid discharging regulator in which the electrolyte discharged from each of the main grooves is gathered, so that the electrolyte is guided toward the liquid discharging manifold. When a width of the main grooves is Wc, a total width Wcₜₒₜₐₗ of the plurality of main grooves is larger than a width Wd of the liquid discharging regulator in a direction perpendicular to an arrangement direction of the main grooves.

## Description

### Technical Field

The present invention relates to a cell frame, a cell stack, and a redox flow battery.

### Background Art

PTLs 1 to 4 disclose redox flow batteries. Each of these redox flow batteries mainly includes a battery cell that includes a positive electrode to which a positive electrolyte is supplied, a negative electrode to which a negative electrolyte is supplied, and a separation membrane interposed between the positive electrode and the negative electrode. The electrolytes of the polarities are supplied to the electrodes of the polarities so as to charge and discharge the redox flow battery. The battery cell is configured with a set of cell frames disposed such that a stack of the positive electrode, the separation membrane, and the negative electrode are interposed between the cell frames. Each of the cell frames includes a bipolar plate and a frame body. The positive electrode and the negative electrode are disposed on front and rear surfaces of the bipolar plate. The frame body is formed of resin and provided at outer peripheral edges of the bipolar plate.

PTLs 1 to 4 disclose the bipolar plate having a plurality of grooves through which the electrolytes flow so as to sufficiently distribute the electrolytes to the electrodes of the polarities in the battery cell.

### Citation List

### Patent Literature

PTL 1: Japanese Unexamined Patent Application Publication No. 2015-122230
PTL 2: Japanese Unexamined Patent Application Publication No. 2015-122231
PTL 3: Japanese Unexamined Patent Application Publication No. 2015-138771
PTL 4: Japanese Unexamined Patent Application Publication No. 2015-210849

### Summary of Invention

A cell frame according to the present disclosure includes a bipolar plate and a frame body. The bipolar plate is in contact with an electrode included in a battery cell. The frame body surrounds a peripheral edge of the bipolar plate. The frame body has a liquid discharging manifold that allows an electrolyte to be discharged therethrough to an outside of the battery cell. The bipolar plate has a plurality of main grooves that are arranged in a surface of the bipolar plate on an electrode side and that allow the electrolyte to flow therethrough. At least one of the frame body and the bipolar plate has a liquid discharging regulator in which the electrolyte discharged from each of the main grooves is gathered, so that the electrolyte is guided toward the liquid discharging manifold. When a width of the main grooves is Wc, a total width Wcₜₒₜₐₗ of the plurality of main grooves is larger than a width Wd of the liquid discharging regulator in a direction perpendicular to an arrangement direction of the main grooves.

A cell stack according to the present disclosure includes the cell frame according to the present disclosure.

A redox flow battery according to the present disclosure includes the cell stack according to the present disclosure.

### Brief Description of Drawings

Figure 1 is a plan view schematically illustrating a cell frame according to a first embodiment.
Figure 2 is a plan view schematically illustrating a cell frame according to a second embodiment.
Figure 3 illustrates an operating principle of a redox flow battery according to an embodiment.
Figure 4 is a schematic structural view of the redox flow battery according to the embodiment.
Figure 5 is a schematic structural view of a cell stack included in the redox flow battery.

### Description of Embodiments

### [Problem to be Solved by Disclosure]

Electrolytes are supplied to electrodes of polarities through a liquid supplying manifold, a liquid supplying guide groove, and a liquid supplying regulator formed in one of pieces of a frame body facing each other. The electrolytes are discharged from the electrodes of the polarities through a liquid discharging regulator, a liquid discharging guide groove, and a liquid discharging manifold formed in another piece out of the pieces of the frame body facing each other. The positive electrolyte (negative electrolyte) passes through the liquid supplying manifold and then the liquid supplying guide groove formed on one surface side (another surface side) of the frame body, is dispersed along an inner peripheral portion on the one surface side (the other surface side) of the frame body through the liquid supplying regulator formed so as to be continuous with the liquid supplying guide groove, and is supplied to the positive electrode (negative electrode). Then, the positive electrolyte (negative electrolyte) flows through the positive electrode (negative electrode), is gathered by the liquid discharging regulator formed in the inner peripheral portion on the one surface side (the other surface side) of the frame body, and is discharged to the liquid discharging manifold through the liquid discharging guide groove formed so as to be continuous with the liquid discharging regulator.

Gases may be generated from the electrolytes as a side reaction along with the electrochemical reaction at the electrodes due to, for example, problems in operation such as overcharge or effects of foreign matter that may be mixed into the electrolytes. These generated gases can be discharged by circulation of the electrolytes in the electrodes of the polarities. However, the flow velocity of the electrolytes in the battery cell is low. As a result, a force to discharge the generated gases is low. Thus, a significantly long period of time may be required to discharge the gases or the generated gases may accumulate at the electrodes. When the generated gases accumulate at the electrodes, contact areas (electrochemical reaction areas) between the electrodes and the electrolytes decrease, and accordingly, the battery reaction is not performed. This leads to degradation of battery performance.

Accordingly, one of objects of the present disclosure is to provide a cell frame, a cell stack, and a redox flow battery with which accumulation of gases generated along with electrochemical reaction at electrodes can be suppressed, and accordingly, degradation of battery performance can be suppressed.

### [Advantageous Effects of Disclosure]

According to the present disclosure, the cell frame, the cell stack, and the redox flow battery with which accumulation of gases generated along with the electrochemical reaction at the electrodes can be suppressed, and accordingly, degradation of battery performance can be suppressed can be provided.

### [Description of An Embodiment According to the Present Invention]

First, features of an embodiment according to the present invention are listed and described.
(1) A cell frame according to the embodiment of the present invention includes
   a bipolar plate and a frame body. The bipolar plate is in contact with an electrode included in a battery cell. The frame body surrounds a peripheral edge of the bipolar plate.

The frame body has a liquid discharging manifold that allows an electrolyte to be discharged therethrough to an outside of the battery cell.

The bipolar plate has a plurality of main grooves that are arranged in a surface of the bipolar plate on an electrode side and that allow the electrolyte to flow therethrough.

At least one of the frame body and the bipolar plate has a liquid discharging regulator in which the electrolyte discharged from each of the main grooves is gathered, so that the electrolyte is guided toward the liquid discharging manifold.

When a width of the main grooves is Wc, a total width Wcₜₒₜₐₗ of the plurality of main grooves is larger than a width Wd of the liquid discharging regulator in a direction perpendicular to an arrangement direction of the main grooves.

With the above-described cell frame, the total width Wcₜₒₜₐₗ of the plurality of main grooves is larger than the width Wd of the liquid discharging regulator. Thus, the flow velocity of the electrolyte can be higher while flowing through the liquid discharging regulator than while flowing through the main grooves. Accordingly, the gases generated along with the electrochemical reaction can quickly flow from the main groove side toward the liquid discharging regulator side by being entrained in the flow of the electrolyte. Thus, accumulation of the generated gases at the electrode can be suppressed. Accordingly, with the above-described cell frame, since a decrease in a electrochemical reaction area in the electrode can be suppressed, degradation of the electrochemical reaction can be suppressed.
(2) Examples of the above-described cell frame include the following form: a width ratio Wc/Wd of the width Wc of each of the main grooves to the width Wd of the liquid discharging regulator satisfies that Wc/Wd is from 0.5 to 5.
   When it is satisfied that the width ratio Wc/Wd of the width Wc of each of the main grooves to the width Wd of the liquid discharging regulator is 0.5 or larger, the total width Wcₜₒₜₐₗ of the main grooves can be sufficiently larger than the width Wd of the liquid discharging regulator. Accordingly, compared to that in the main grooves, the flow velocity of the electrolyte flowing through the liquid discharging regulator can be further increased. Thus, the generated gases can more quickly flow toward the liquid discharging regulator side by being entrained in the flow of the electrolyte. In contrast, a decrease in the electrochemical reaction area in the electrode due to an excessive increase in the width of the main grooves can be suppressed when it is satisfied that the width ratio Wc/Wd is 5 or smaller. The flow of the electrolyte in the bipolar plate forms a flow along the main grooves and a flow across a rib positioned between the adjacent main grooves. Out of the above-described flows, the electrochemical reaction is preferably performed particularly along part of the flow across the rib. Thus, the electrochemical reaction area can be ensured by ensuring the width of the rib.
(3) Examples of the above-described cell frame include the following form: the width Wd of the liquid discharging regulator satisfies that Wd is from 0.6 to 20 mm.
   When it is satisfied that the width Wd of the liquid discharging regulator is 0.6 mm or larger, an increase in flow resistance due to an excessive decrease in the width of the liquid discharging regulator can be suppressed. In contrast, when it is satisfied that the width Wd of the liquid discharging regulator is 20 mm or smaller, the flow velocity of the electrolyte is increased more easily while flowing through the liquid discharging regulator than while flowing through the main grooves, and the generated gases easily flow toward the liquid discharging regulator side by being entrained in the flow of the electrolyte.
(4) Examples of the above-described cell frame include the following form: the width Wc of the main grooves satisfies that Wc is from 3 to 10 mm.
   When it is satisfied that the width Wc of the main grooves is 3 mm or larger, the increase in flow resistance due to an excessive decrease in the width of the main grooves can be suppressed. In addition, an increase in the flow velocity of the electrolyte flowing through the liquid discharging regulators is easily realized compared to that in the main grooves, and accordingly, the generated gases easily flow toward the liquid discharging regulator side by being entrained in the flow of the electrolyte. In contrast, the decrease in the electrochemical reaction area in the electrode due to the excessive increase in the width of the main grooves can be suppressed when it is satisfied that the width Wc of the main grooves is 10 mm or smaller.
(5) Examples of the above-described cell frame include the following form: the liquid discharging regulator has a cut formed in the arrangement direction of the main grooves in the frame body, and outlets of the main grooves are provided so as to be continuous with the cut.
   The liquid discharging regulator is defined by the cut provided in the frame body. In this case, with the outlets of the main grooves provided so as to be continuous with the cut, the electrolyte discharged from each of the main grooves can be gathered by the liquid discharging regulator.
(6) Examples of the above-described cell frame include the following form: the liquid discharging regulator has a gathering groove formed in the arrangement direction of the main grooves in the bipolar plate so as to be continuous with outlets of the main grooves, and the frame body has a liquid discharging guide groove that communicates the gathering groove and the liquid discharging manifold with each other.
   The liquid discharging regulator is formed by the gathering groove provided in the bipolar plate. In this case, by providing a liquid discharging guide groove portion that communicates the gathering groove and the liquid discharging manifold with each other in the frame body, the electrolytes discharged from the main grooves can be gathered by the gathering groove, and the gathered electrolyte can be discharged from the liquid discharging manifold.
(7) A cell stack according to the embodiment of the present invention includes the cell frame according to any one of above-described (1) to (6).
   Since the above-described cell stack includes the cell frame according the embodiment of the present invention, the gases generated along with the electrochemical reaction can be discharged to the outside of the battery cell by being entrained in the flow of the electrolyte. Thus, accumulation of the generated gases at the electrode can be suppressed. Accordingly, since the decrease in the electrochemical reaction area in the electrode can be suppressed, degradation of the electrochemical reaction can be suppressed.
(8) A redox flow battery according to the embodiment of the present invention includes the cell stack according to the above-described (7).

Since the above-described redox flow battery includes the cell stack according the embodiment of the present invention, the gases generated along with the electrochemical reaction can be discharged to the outside of the battery cell by being entrained in the flow of the electrolyte. Thus, accumulation of the generated gases at the electrode can be suppressed. Accordingly, since the decrease in the electrochemical reaction area in the electrode can be suppressed, degradation of the electrochemical reaction can be suppressed.

### [Details of the Embodiment According to the Present Invention]

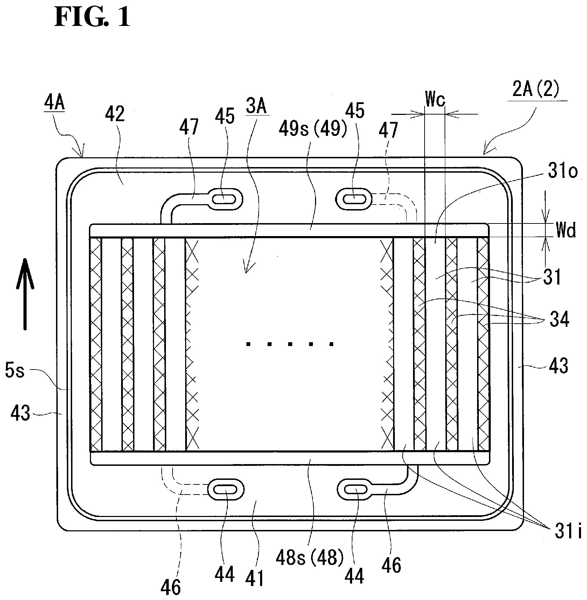

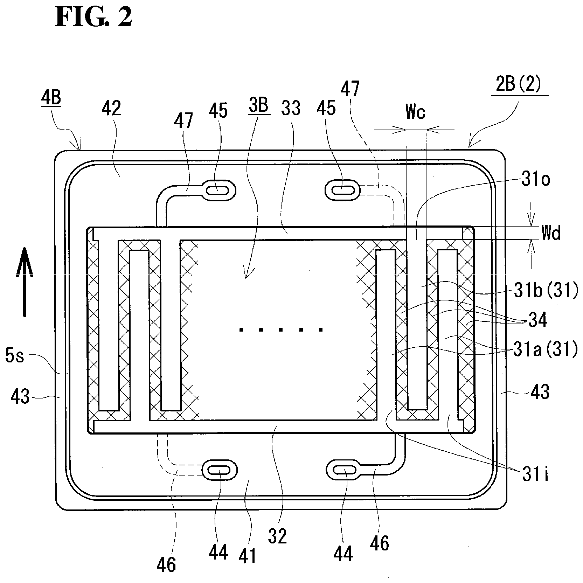

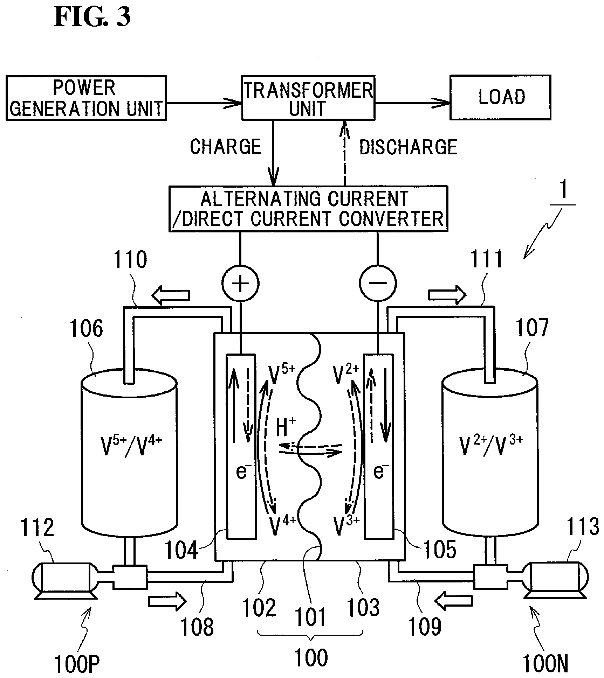

The details of the cell frame, the cell stack, and the redox flow battery (RF battery) according to the embodiment of the present invention are described below with reference to the drawings. The same reference numerals in the drawings denote elements of the same names. First, with reference to Figs. 3 to 5, a basic structure of an RF battery 1 of the embodiment is described. After that, with reference mainly to Figs. 1 and 2, an embodiment of the cell frame provided in the RF battery 1 of the embodiment is described. It should be noted that the present invention is not limited to these examples. The present invention is indicated by the scope of Claims and is intended to embrace all the modifications within the scope of Claims and within meaning and scope of equivalency.

### [RF Battery]

Typically, as illustrated in Fig. 3, the RF battery is connected via, for example, an alternating current/direct current converter and a transformer unit, to a power generation unit and a load such as a power system or consumer. The RF battery 1 is charged with the power generation unit as a power supply source and is discharged with a load as a power consuming target. Examples of the power generation unit include, for example, a photovoltaic power generator, a wind power generator, and another ordinary power plant.

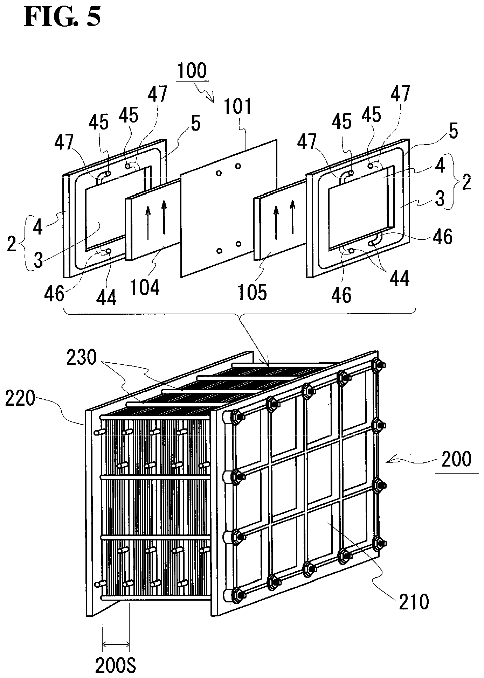

The RF battery 1 includes a battery cell 100 that is separated into a positive electrode cell 102 and a negative electrode cell 103 by a separation membrane 101. The positive electrode cell 102 includes therein a positive electrode 104 to which a positive electrolyte is supplied. The negative electrode cell 103 includes therein a negative electrode 105 to which a negative electrolyte is supplied. Typically, the RF battery 1 includes a plurality of battery cells 100 and cell frames 2 (Fig. 5). Each of the cell frames 2 includes a bipolar plate 3 disposed between the adjacent battery cells 100.

The positive electrode 104 and the negative electrode 105 are reaction fields where electrochemical reaction is performed by active materials contained in the electrolytes. The separation membrane 101 serves as a separation member that separates the positive electrode 104 and the negative electrode 105 from each other and that is permeable to specified ions. A bipolar plate 3 is disposed between the positive electrode 104 and the negative electrode 105. The bipolar plate 3 is a conductive member that allows electric current to flow therethrough and that is impermeable to the electrolytes. The cell frame 2 includes, as illustrated in Fig. 5, the bipolar plate 3 and a frame body 4 that surrounds peripheral edges of the bipolar plate 3.

A positive electrolyte circulation mechanism 100P that supplies the positive electrolyte by circulation to the positive electrode cell 102 includes a positive electrolyte tank 106, ducts 108 and 110, and a pump 112. The positive electrolyte tank 106 stores the positive electrolyte. The ducts 108 and 110 connect the positive electrolyte tank 106 and the positive electrode cell 102 to each other. The pump 112 is provided in the duct 108 disposed on the upstream side (supply side). A negative electrolyte circulation mechanism 100N that supplies the negative electrolyte by circulation to the negative electrode cell 103 includes a negative electrolyte tank 107, ducts 109 and 111, and a pump 113. The negative electrolyte tank 107 stores the negative electrolyte. The ducts 109 and 111 connect the negative electrolyte tank 107 and the negative electrode cell 103 to each other. The pump 113 is provided in the duct 109 disposed on the upstream side (supply side).

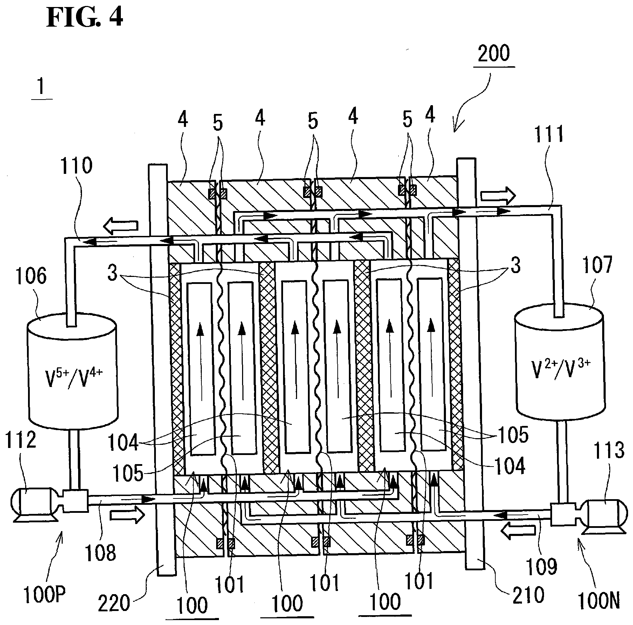

The positive electrolyte is supplied from the positive electrolyte tank 106 to the positive electrode 104 through the duct 108 on the upstream side and returned from the positive electrode 104 to the positive electrolyte tank 106 through the duct 110 on the downstream side (discharge side). Furthermore, the negative electrolyte is supplied from the negative electrolyte tank 107 to the negative electrode 105 through the duct 109 on the upstream side and returned from the negative electrode 105 to the negative electrolyte tank 107 through the duct 111 on the downstream side (discharge side). The positive electrolyte and the negative electrolyte are respectively supplied to the positive electrode 104 and the negative electrode 105 by circulation of the positive electrolyte and the negative electrolyte. Thus, the active materials in the electrolytes of the polarities undergo valence-change reactions, so that the RF battery 1 is charged and discharged. Referring to Figs. 3 and 4, vanadium ions illustrated in the positive electrolyte tank 106 and the negative electrolyte tank 107 exemplify ion species contained as the active materials in the positive electrolyte and the negative electrolyte. In Fig. 3, solid arrows indicate charge and broken arrows indicate discharge.

Typically, the RF battery 1 is used in the form referred to as a cell stack 200 in which the plurality of battery cells 100 are stacked. As illustrated in Fig. 5, the cell stack 200 includes a stack, a pair of end plates 210 and 220, connecting members 230, and fastening members. The stack is structured by repeatedly stacking a certain cell frame 2, the positive electrode 104, the separation membrane 101, the negative electrode 105, and another cell frame 2. The stack is interposed between the end plates 210 and 220. The connecting members 230 connect the end plates 210 and 220 to each other. The fastening members are, for example, nuts. The stacked state of the stack is maintained with a fastening force in the stacking direction by fastening the end plates 210 and 220 with the fastening members. A sub-stack 200S includes a specified number of battery cells 100. The cell stack 200 is used in the form in which a plurality of sub-stacks 200S are stacked. A supply/discharge plate (not illustrated) is disposed instead of the bipolar plate 3 in the cell frame 2 positioned at each end of the sub-stacks 200S or the cell stack 200 in the stacking direction of the battery cell 100.

The electrolytes of the polarities are each supplied to a corresponding one of the positive electrode 104 and the negative electrode 105 through liquid supplying manifolds 44, liquid supplying guide grooves 46, and a liquid supplying regulator (not illustrated) formed at one piece (liquid-supplying-side piece; lower side in the page of Fig. 5) out of pieces of the frame body 4 of the cell frame 2 facing each other. The electrolytes of the polarities are each discharged from a corresponding one of the positive electrode 104 and the negative electrode 105 through a liquid discharging regulator (not illustrated), liquid discharging guide grooves 47, and liquid discharging manifolds 45 formed at another piece (liquid-discharging-side piece; upper side in the page of Fig. 5) out of the pieces of the frame body 4 of the cell frame 2 facing each other. The positive electrolyte passes through the liquid supplying manifolds 44 and then the liquid supplying guide grooves 46 formed on one surface side (front side of the page of Fig. 5) of the frame body 4, is dispersed along an inner peripheral portion on the one surface side (another surface side) of the frame body 4 through the liquid supplying regulator formed so as to be continuous with the liquid supplying guide grooves 46, and is supplied to the positive electrode 104. Then, as indicated by arrows in an upper view of Fig. 5, the positive electrolyte flows from the lower side toward the upper side of the positive electrode 104, is gathered by the liquid discharging regulator formed in the inner peripheral portion on the one surface side (front side of the page) of the frame body 4, and is discharged to the liquid discharging manifolds 45 through the liquid discharging guide grooves 47 formed so as to be continuous with the liquid discharging regulator. Supply and discharge of the negative electrolyte are performed in the same way as those of the positive electrolyte except that the negative electrolyte is supplied and discharged on the other surface side (back side of the page) of the frame body 4. Annular sealing members 5 such as O rings or flat packings are disposed between the frame bodies 4, thereby suppressing leakage of the electrolytes from the battery cell 100.

The basic structure of the RF battery 1 may be appropriately selected from known structures.

### [Main Features of the RF Battery]

One of features of the RF battery 1 according to the embodiment is use of the cell frame with which gases generated as a side reaction along with the electrochemical reaction at the electrodes can be entrained in the flows of the electrolytes so as to be discharged to the outside of the battery cell, and accordingly, accumulation of the generated gases at the electrodes can be suppressed. Hereafter, the cell frame provided in the RF battery 1 according to the above-described embodiment are described in detail.

### «First Embodiment»

Referring to Fig. 1, a cell frame 2A according to a first embodiment is described. This cell frame 2A corresponds to the above-described cell frame 2. The cell frame 2A includes a bipolar plate 3A and a frame body 4A. The bipolar plate 3A is in contact with the positive electrode 104 and the negative electrode 105 included in the battery cell 100 (Fig. 5). The frame body 4A surrounds peripheral edges of the bipolar plate 3A. The bipolar plate 3A has a plurality of main grooves 31 that are arranged in the front and rear surfaces of the bipolar plate 3A and allow the electrolytes to flow therethrough. The frame body 4A includes the liquid discharging manifolds 45, liquid discharging regulators 49, and the liquid discharging guide grooves 47. The liquid discharging manifolds 45 allow the electrolytes to be discharged therefrom to the outside of the battery cell 100. The liquid discharging regulators 49 are defined by cuts 49s formed in an arrangement direction of the main grooves 31. The liquid discharging guide grooves 47 connect the liquid discharging regulators 49 and the liquid discharging manifolds 45 to one another. The main grooves 31 have outlets 31o formed so as to be continuous with the liquid discharging regulators 49 (cuts 49s).

One of the features of the cell frame 2A according to the first embodiment is that, when the width of the main grooves 31 is Wc, a total width Wcₜₒₜₐₗ of the plurality of main grooves 31 is larger than a width Wd of the liquid discharging regulators 49 in a direction perpendicular to the arrangement direction of the main grooves 31. When Wcₜₒₜₐₗ > Wd is satisfied, the flow velocity of the electrolytes can be higher while flowing through the liquid discharging regulators 49 than while flowing through the main grooves 31. Accordingly, the gases generated along with the electrochemical reaction at the electrodes can quickly flow from the main groove 31 side toward the liquid discharging regulator 49 side by being entrained in the flows of the electrolytes and can be discharged to the outside of the battery cell 100 from the liquid discharging manifolds 45.

### (The Bipolar Plate)

In principle, the bipolar plate 3A separates the adjacent battery cells 100 (Fig. 5) from each other. The bipolar plate 3A is a rectangular flat plate. The positive electrode 104 and the negative electrode 105 of one of the battery cell 100 and the adjacent battery cell 100 are respectively disposed in the front surface and the rear surface of the bipolar plate 3A. The bipolar plate 3A has the plurality of main grooves 31 arranged in the surface thereof facing the positive electrode 104 and the surface thereof facing the negative electrode 105. The plurality of main grooves 31 function as channels through which the electrolytes flow. The positive electrolyte flows through the main grooves 31 provided in one of the surfaces of the bipolar plate 3A facing the positive electrode 104. The negative electrolyte flows through the main grooves 31 provided in the other surface of the bipolar plate 3A facing the negative electrode 105. The flows of the electrolytes in each of the battery cells 100 can be adjusted by the shape, dimensions, and so forth of the main grooves 31.

According to the present example, the main grooves 31 are formed by vertical grooves extending in a direction directed from a liquid-supplying-side piece 41 toward a liquid -discharging-side piece 42 (longitudinal direction of connecting pieces 43) of the frame body 4A, which will be described later. Ribs 34 are formed between the main grooves 31 adjacent to one another. In Fig. 1, the ribs 34 are crosshatched for convenience of description. The flows of the electrolytes in the bipolar plate 3A form flows along the main grooves 31 and flows across the ribs 34.

The main grooves 31 are provided so as to satisfy Wcₜₒₜₐₗ > Wd, that is, the total of the width Wcₜₒₜₐₗ of the plurality of main grooves 31 (the width Wc of the main grooves 31 × the number of main grooves 31) is larger than the width Wd of the liquid discharging regulators 49 to be described later in the direction perpendicular to the arrangement direction of the main grooves 31. Wcₜₒₜₐₗ > Wd is satisfied by the width Wc of the main grooves 31 in either of the following forms: (1) the width Wc of at least one of the plurality of main grooves 31 is larger than the width Wd; and (2) although the width Wc of each of the plurality of main grooves 31 is smaller than the width Wd, the total of the width Wc of the main grooves 31 satisfies Wcₜₒₜₐₗ > Wd. Here, the width Wc may be fixed or may vary between the plurality of main grooves 31. Furthermore, the width Wc of each of the main grooves 31 may be uniform or may vary in the longitudinal direction of the main grooves 31. Furthermore, the width Wc of each of the main grooves 31 may be uniform or may vary in the depth direction of the main grooves 31. When the width Wc of the main grooves 31 varies in the longitudinal direction or the depth direction, a largest width is regarded as the width Wc. It is preferable that the width Wc of each of the plurality of main grooves 31 be larger than the width Wd. Hereafter, the main grooves 31 are described in detail.

Preferably, the width Wc of the main grooves 31 satisfies that the Wc is from 3 to 10 mm. When it is satisfied that the width Wc is 3 mm or larger, an increase in flow resistance due to an excessive decrease in the width of the main grooves 31 can be suppressed. In addition, an increase in the flow velocity of the electrolytes flowing through the liquid discharging regulators 49, which will be described later, is easily realized compared to that in the main grooves 31. In order to increase the flow velocity of the electrolytes flowing through the liquid discharging regulators 49, that is, in order to decrease the flow velocity of the electrolytes flowing through the main grooves 31, it is preferable that the width Wc be large. More preferably, the width Wc is 4 mm or larger, in particular, 5 mm or larger. In contrast, a decrease in electrochemical reaction areas in the electrodes due to an excessive increase in the width of the main grooves 31 can be suppressed when it is satisfied that the width Wc of the main grooves is 10 mm or smaller. In order to ensure the electrochemical reaction areas in the electrodes, it is preferable that the width of the ribs 34 be large. Correspondingly, it is preferable that the width Wc of the main grooves 31 be small. More preferably, the width Wc is 9 mm or smaller, in particular, 8 mm or smaller.

The sectional shape of the main grooves 31 may be an arbitrary shape such as, for example, a rectangular shape or a semi-circular shape. In the case where the width of the main grooves 31 is not uniform in a range from the opening to the bottom, for example, in the case of the main grooves 31 having a semi-circular section, a largest width is regarded as the above-described width Wc. According to the present example, the main grooves 31 have a rectangular section having a width that is uniform from the opening to the bottom.

Furthermore, the width of the main grooves 31 may be uniform in the longitudinal direction thereof. Alternatively, the width of the main grooves 31 may vary in the longitudinal direction thereof, that is, the width of the main grooves 31 may increase or, inversely, decrease from inlets 31i toward the outlets 31o. In this case, it is sufficient that the width Wc of the main grooves 31 be larger than the width Wd of the liquid discharging regulators 49 at least partly in the longitudinal direction. The width of the main grooves 31 may be smaller than the above-described width Wd partly in the longitudinal direction. According to the present example, the main grooves 31 have the width Wc that is uniform in the longitudinal direction and larger than the width Wd of the liquid discharging regulators 49.

The bipolar plate 3A may be formed of a material that allows electrical current to pass therethrough and does not allow the electrolytes to pass therethrough. Furthermore, it is preferable that the material have acid resistance and an appropriate stiffness. Examples of the material of the bipolar plate 3A include, for example, an electroconductive plastic formed of graphite and a polyolefin-based organic compound or a chlorinated organic compound. The material may be an electroconductive plastic in which at least one of carbon black and diamond like carbon substitutes for part of the graphite. Examples of the polyolefin-based organic compound include polyethylene, polypropylene, polybutene, and the like. Examples of the chlorinated organic compound include vinyl chloride, chlorinated polyethylene, chlorinated paraffin, and the like. With the bipolar plate 3A formed of such a material, the bipolar plate 3A can have a decreased electrical resistance and has a good acid resistance.

### (The Frame Body)

The frame body 4A forms thereinside a region that serves as a battery cell 100 (Fig. 5). The frame body 4A includes the liquid-supplying-side piece 41, the liquid-discharging-side piece 42, and a pair of the connecting pieces 43. The liquid-discharging-side piece 42 faces the liquid-supplying-side piece 41. The connecting pieces 43 connect ends of the liquid-supplying-side piece 41 and the liquid-discharging-side piece 42 to one another, face each other, and are perpendicular to the liquid-supplying-side piece 41 and the liquid-discharging-side piece 42. The frame body 4A has a rectangular shape. The liquid-supplying-side piece 41 and the liquid-discharging-side piece 42 form long pieces of the rectangular frame and the connecting pieces 43 form short pieces of the rectangular frame. In the case where the cell frame 2A is seen in plan view, when a direction in which the liquid-supplying-side piece 41 and the liquid-discharging-side piece 42 face each other is defined as the vertical direction and a direction perpendicular to the vertical direction is defined as the horizontal direction, the liquid-supplying-side piece 41 is positioned on the lower side in the vertical direction and the liquid-discharging-side piece 42 is positioned on the upper side in the vertical direction. The electrolytes flow from the lower side toward the upper side of the frame body 4A in the vertical direction.

The thickness of the frame body 4A is larger than that of the bipolar plate 3A. Accordingly, when the frame body 4A surrounds the peripheral edges of the bipolar plate 3A, a level difference is formed so as to form a space in which the positive electrode 104 (negative electrode 105) is disposed between the front surface (rear surface) of the bipolar plate 3A and the front surface (rear surface) of the frame body 4A.

### - The Liquid-Discharging-Side Piece

The liquid-discharging-side piece 42 has the liquid discharging regulators 49, the liquid discharging guide grooves 47, and the liquid discharging manifolds 45. The electrolytes discharged from the bipolar plate 3A are gathered in the liquid discharging regulators 49. The liquid discharging guide grooves 47 guide the electrolytes from the liquid discharging regulators 49 to the liquid discharging manifolds 45. The liquid discharging manifolds 45 allow the electrolytes to be discharged therefrom to the outside of the battery cell 100. The liquid discharging regulators 49 are defined by the cuts 49s formed in the liquid-discharging-side piece 42 in the arrangement direction of the main grooves 31. The cuts 49s are elongated thin plate-shaped space formed by removing parts of an inner peripheral portion of the liquid-discharging-side piece 42 in the front and rear surfaces by a specified width. With these cuts 49s, the front and rear surfaces of the inner peripheral portion of the liquid-discharging-side piece 42 have level difference portions, and the inner peripheral portion interposed between the level difference portions in the front and rear surfaces is a thin portion. The electrolytes flow in the cuts 49s with the thin portions at the bottoms. When the cell stack 200 (Fig. 5) is built, the liquid discharging guide grooves 47 and the liquid discharging regulators 49 are covered with protection plates (not illustrated) formed of plastic. Thus, the electrolytes can flow between the bipolar plate 3A and the liquid discharging manifolds 45 without leakage of the electrolytes through the liquid discharging guide grooves 47 or the liquid discharging regulators 49.

The outlets 31o of the main grooves 31 of the bipolar plate 3A are continuous with the liquid discharging regulators 49 of the frame body 4A. With this structure, the electrolytes discharged from the bipolar plate 3A (electrodes) are gathered in the liquid discharging regulators 49 in the arrangement direction of the main grooves 31 of the bipolar plate 3A, flow through the liquid discharging guide grooves 47, and are discharged from the liquid discharging manifolds 45. According to the present example, the bottom surfaces of the main grooves 31, the bottom surfaces of the liquid discharging regulators 49, and the bottom surfaces of the liquid discharging guide grooves 47 are substantially flush with one another. There may be level differences between the bottom surfaces.

Preferably, regarding a width ratio Wc/Wd, which is the ratio of the width Wc of the main grooves 31 to the width Wd of the liquid discharging regulators 49 in the direction perpendicular to the arrangement direction of the main grooves 31 (vertical direction), the width Wd has such a size that satisfies that Wc/Wd is from 0.5 to 5. The width Wd of the liquid discharging regulators 49 refers to, when the cell frame 2A is seen in plan view, the length in the direction perpendicular to the arrangement direction of the main grooves 31 in the plane. That is, the width Wd of the liquid discharging regulators 49 is a length in a direction perpendicular to both the arrangement direction of the main grooves 31 and the depth direction of the main grooves 31. The sectional shape of the liquid discharging regulators 49 may be an arbitrary shape such as, for example, a rectangular shape having a uniform width from the opening to the bottom. The sectional shape of the liquid discharging regulators 49 does not necessarily have a uniform width from the opening to the bottom. In this case, a smallest width is considered as the width Wd. According to the present example, the liquid discharging regulators 49 have a rectangular section having a uniform width from the opening to the bottom.

When it is satisfied that Wc/Wd is 0.5 or larger, the total width Wcₜₒₜₐₗ of the main grooves 31 can be sufficiently larger than the width Wd of the liquid discharging regulators 49. Accordingly, compared to that in the main grooves 31, the flow velocity of the electrolytes flowing through the liquid discharging regulators 49 can be further increased. Thus, the generated gases can more quickly flow toward the liquid discharging regulator 49 side by being entrained in the flows of the electrolytes. In order to increase the flow velocity of the electrolytes flowing through the liquid discharging regulators 49, it is preferable that the width ratio Wc/Wd be large. More preferably, the width ratio Wc/Wd is 1.0 or larger, in particular, 1.5 or larger. In contrast, a decrease in electrochemical reaction areas in the electrodes (the positive electrode 104 and the negative electrode 105) due to an excessive increase in the width of the main grooves 31 can be suppressed when it is satisfied that the width ratio Wc/Wd is 5 or smaller. In order to ensure the electrochemical reaction areas in the electrodes, it is preferable that the width ratio Wc/Wd be 4 or smaller, in particular, 3 or smaller. In order to satisfy the above-described width ratio Wc/Wd, preferably, it is satisfied that the liquid discharging regulators 49 is 0.6 to 20 mm, more preferably, 0.75 to 10 mm, and yet more preferably, 1 to 6.7 mm, in particular, 2 to 5 mm.

The width of the liquid discharging regulators 49 may be uniform or partially increased in the arrangement direction of the main grooves 31. When the width is not uniform, a smallest width is considered as the Wd. According to the present example, the width Wd is uniform in the arrangement direction of the main grooves 31.

### - The Liquid-Supplying-Side Piece

The liquid-supplying-side piece 41 has the liquid supplying manifolds 44, the liquid supplying guide grooves 46, and liquid supplying regulators 48. The liquid supplying manifolds 44 allow the electrolytes to be supplied therethrough into the battery cell 100. The liquid supplying guide grooves 46 extend from the liquid supplying manifolds 44. The liquid supplying regulators 48 disperse the electrolytes supplied from the liquid supplying guide grooves 46 in the arrangement direction of the main grooves 31 of the bipolar plate 3A. The liquid supplying regulators 48 are defined by cuts 48s formed in the liquid-supplying-side piece 41 in the arrangement direction of the main grooves 31. The cuts 48s are elongated thin plate-shaped space formed by removing parts of an inner peripheral portions of the liquid-supplying-side piece 41 in the front and rear surfaces by a specified width. With these cuts 48s, the front and rear surfaces of the inner peripheral portion of the liquid-supplying-side piece 41 have level difference portions, and the inner peripheral portion interposed between the level difference portions in the front and rear surfaces is a thin portion. The electrolytes flow in the cuts 48s with the thin portions at the bottoms. When the cell stack 200 (Fig. 5) is built, the liquid supplying guide grooves 46 and the liquid supplying regulators 48 are covered with protection plates (not illustrated) formed of plastic. Thus, the electrolytes can flow between the liquid supplying manifolds 44 and the bipolar plate 3A without leakage of the electrolytes through the liquid supplying guide grooves 46 or the liquid supplying regulators 48.

The inlets 31i of the main grooves 31 of the bipolar plate 3A are continuous with the liquid supplying regulators 48 of the frame body 4A. With this structure, the electrolytes supplied from the liquid supplying manifolds 44 pass through the liquid supplying guide grooves 46, are dispersed by the liquid supplying regulators 48 in the arrangement direction of the main grooves 31 of the bipolar plate 3A so as to be distributed throughout the width direction of the bipolar plate 3A, reach the inlets 31i of the main grooves 31, and flow throughout the electrodes. According to the present example, the bottom surfaces of the liquid supplying guide grooves 46, the bottom surfaces of the liquid supplying regulators 48, and the bottom surfaces of the main grooves 31 are substantially flush with one another. There may be level differences between the bottom surfaces.

The frame body 4A is formed of a material that satisfies acid resistance, electrical insulation, and mechanical characteristics. Examples of the material of the frame body 4A include, for example, various types of fluorine resin such as polytetrafluoroethylene and the like, polypropylene, polyethylene, and vinyl chloride.

Sealing grooves 5s in which the annular sealing members 5 (Fig. 5) are disposed are formed in a circumferential direction in the frame body 4A.

### «Second Embodiment»

Referring to Fig. 2, a cell frame 2B according to a second embodiment is described. A main difference between this cell frame 2B and the cell frame 2A according to the first embodiment is that liquid discharging regulators are provided in a bipolar plate 3B. Furthermore, the shape of the main grooves 31 formed in the bipolar plate 3B of the cell frame 2B is different from that of the bipolar plate 3A according to the first embodiment. Hereafter, description is mainly made for the differences between the cell frame 2B and the cell frame 2A according to the first embodiment.

### (The Bipolar Plate)

As the main grooves 31, the bipolar plate 3B includes introducing-side main grooves 31a through which the electrolytes are introduced to the electrodes and discharging-side main grooves 31b from which the electrolytes are discharged from the electrodes. The introducing-side main grooves 31a and the discharging-side main grooves 31b are independently of one another instead of communicating with each other. The introducing-side main grooves 31a and the discharging-side main grooves 31b are arranged side-by-side in an alternating sequence so as to be spaced from one another by a specified distance. The introducing-side main grooves 31a together with distributing grooves 32 form a comb-shaped structure that faces a comb-shaped structure formed by the discharging-side main grooves 31b and gathering grooves 33. The introducing-side main grooves 31a have the inlets 31i for the electrolytes and the discharging-side main grooves 31b have outlets 31o for the electrolytes. The ribs 34 are formed between the introducing-side main grooves 31a and the adjacent discharging-side main grooves 31b.

The bipolar plate 3B has the gathering grooves 33 that serve as the liquid discharging regulators. The gathering grooves 33 are formed in the arrangement direction of the discharging-side main grooves 31b so as to be continuous with the outlets 31o of the discharging-side main grooves 31b. The gathering grooves 33 communicate with the liquid discharging manifolds 45 through the liquid discharging guide grooves 47 formed in a frame body 4B, which will be described later. According to the present example, the main grooves 31 are formed by vertical grooves extending in a direction directed from the liquid-supplying-side piece 41 of the frame body 4B toward the liquid -discharging-side piece 42 of the frame body 4B, and the gathering grooves 33 are formed by horizontal grooves in a direction extending between the pair of connecting pieces 43.

The bipolar plate 3B has the distributing grooves 32 that serve as the liquid supplying regulators. The distributing grooves 32 are formed in the arrangement direction of the introducing-side main grooves 31a so as to be continuous with the inlets 31i of the introducing-side main grooves 31a. The distributing grooves 32 communicate with the liquid supplying manifolds 44 through the liquid supplying guide grooves 46 formed in the frame body 4B, which will be described later. According to the present example, the distributing grooves 32 are formed by horizontal grooves similarly to the gathering grooves 33.

### (The Frame Body)

The liquid-discharging-side piece 42 of the frame body 4B includes the liquid discharging manifolds 45 and the liquid discharging guide grooves 47. The liquid discharging guide grooves 47 allow communication between the gathering grooves 33 formed in the bipolar plate 3B and the liquid discharging manifolds 45. With this structure, the electrolytes discharged from the outlets 31o of the discharging-side main grooves 31b are gathered in the gathering grooves 33, pass through the liquid discharging guide grooves 47, and are discharged from the liquid discharging manifolds 45. According to the present example, the bottom surfaces of the discharging-side main grooves 31b, the bottom surfaces of the gathering grooves 33, and the bottom surfaces of the liquid discharging guide grooves 47 are substantially flush with one another. There may be level differences between the bottom surfaces.

The liquid-supplying-side piece 41 of the frame body 4B includes the liquid supplying manifolds 44 and the liquid supplying guide grooves 46. The liquid supplying guide grooves 46 allow communication between the distributing grooves 32 formed in the bipolar plate 3B and the liquid supplying manifolds 44. With this structure, the electrolytes supplied from the liquid supplying manifolds 44 pass through the liquid supplying guide grooves 46, are dispersed by the distributing grooves 32 of the bipolar plate 3B so as to be distributed throughout the width direction of the bipolar plate 3B, reach the inlets 31i of the introducing-side main grooves 31a, and flow throughout the electrodes. According to the present example, the bottom surfaces of the liquid supplying guide grooves 46, the bottom surfaces of the distributing grooves 32, and the bottom surfaces of the introducing-side main grooves 31a are substantially flush with one another. There may be level differences between the bottom surfaces.

In the cell frame 2B according to the second embodiment, similarly to the cell frame 2A according to the first embodiment, the total width Wcₜₒₜₐₗ of the plurality of discharging-side main grooves 31b (main grooves 31) is larger than the width Wd of the gathering grooves 33 (liquid discharging regulators) in the direction perpendicular to the arrangement direction of the discharging-side main grooves 31b. In particular, the width ratio Wc/Wd of the width Wc of the discharging-side main grooves 31b to the width Wd of the gathering grooves 33 satisfies that Wc/Wd is from 0.5 to 5. Thus, the flow velocity of the electrolytes can be higher while flowing through the gathering grooves 33 than while flowing through the discharging-side main grooves 31b. Accordingly, the gases generated along with the electrochemical reaction at the electrodes (the positive electrode 104 and the negative electrode 105) can quickly flow from the discharge-side main groove 31b side toward the gathering groove 33 side by being entrained in the flows of the electrolytes and can be discharged to the outside of the battery cell 100 from the liquid discharging manifolds 45.

### «Variants»

The main grooves and the liquid discharging regulators of the cell frame 2A according to the first embodiment and the cell frame 2B according to the second embodiment may be embodied as follows.
(1) Each of the main grooves is a single vertical groove in which a corresponding one of the inlets and a corresponding one of the outlets communicate with each other (see Fig. 1). The liquid discharging regulators are gathering grooves formed in the arrangement direction of the main grooves in the bipolar plate so as to be continuous with the outlets (see Fig. 2). The liquid supplying regulators may be distributing grooves formed in the arrangement direction of the main grooves in the bipolar plate so as to be continuous with the inlets or cuts formed in the frame body.
(2) The main grooves are vertical grooves including the introducing-side main grooves having the inlets and the discharging-side main grooves having the outlets which are independently of one another instead of communicating with one another (see Fig. 2). The liquid discharging regulators are cuts formed in the arrangement direction of the main grooves in the frame body so as to be continuous with the outlets of the discharging-side main grooves (see Fig. 1). The liquid supplying regulators may be distributing grooves formed in the arrangement direction of the main grooves in the bipolar plate so as to be continuous with the inlets. Alternatively, the liquid supplying regulators are cuts formed in the frame body.
(3) In the case where the main grooves include the introducing-side main grooves and the discharging-side main grooves, the introducing-side main grooves and the discharging-side main grooves face one another and spaced from one another in a flowing direction of the electrolytes instead of engaging with one another and being arranged in an alternating sequence.
(4) The main grooves have a vertical groove structure. In this case, the liquid supplying regulators and the liquid discharging regulators are provided in the vertical direction.

### [Testing Example]

A plurality of RF batteries were made (testing samples A to G). Each of the RF batteries includes a cell frame (Fig. 1) that includes a bipolar plate having front and rear surfaces and a frame body having cuts. The bipolar plate has a plurality of main grooves having a vertical groove structure in each of the front and rear surfaces. The cuts of the frame body serve as liquid discharging regulators. Then, charge and discharge testing was performed with the RF batteries, and the cell resistivity of the RF batteries was measured. The charge and discharge testing was performed under the following conditions. That is, discharge end voltage: 1 V, charge end voltage: 1.6 V, and current: 25 A. The cell resistivity was evaluated as follows: a charge and discharge curve was drawn in accordance with the charge and discharge testing. The cell resistivity at a third cycle from the charge and discharge curve was evaluated. Table 1 shows, for each of the testing samples, the width Wc of the main grooves of the bipolar plate, the number of main grooves in the bipolar plate, the total width Wcₜₒₜₐₗ of the main grooves of the bipolar plate, the width Wd of the liquid discharging regulators of the frame body, and the width ratio Wc/Wd, which is the ratio of the width Wc to the width Wd, and the cell resistivity. According to the present example, all of the plurality of main grooves have the same shape and the dimensions, and the width of the grooves is uniform in the longitudinal direction and the depth direction. The width of the liquid supplying regulators is uniform in the longitudinal direction.

**[Table 1]**

| Testing sample | Main groove | | | Liquid discharging regulator | Width ratio Wc/Wd | Cell resistivity (Ω·cm²) |
|---|---|---|---|---|---|---|
| | Width Wc (mm) | Number of grooves (number) | Total width Wc ₜₒₜₐₗ | Width Wd(mm) | | |
| A | 1 | 4 | 4 | 4 | 0.2 | 0.95 |
| B | 1 | 50 | 50 | 5 | 0.2 | 0.75 |
| C | 3 | 28 | 84 | 6 | 0.5 | 0.65 |
| D | 5 | 13 | 65 | 5 | 1 | 0.63 |
| E | 6 | 9 | 54 | 3 | 2 | 0.64 |
| F | 10 | 5 | 50 | 2 | 5 | 0.62 |
| G | 15 | 3 | 45 | 2 | 7.5 | 0.78 |

From Table 1, it is found that, the cell resistivity of the RF batteries can be decreased with the testing samples B to G in which the total width Wcₜₒₜₐₗ of the main grooves is larger than the width Wd of the liquid discharging regulators compared to the testing sample A in which the total width Wcₜₒₜₐₗ of the main grooves is equal to the width Wd of the liquid discharging regulators. The reason for this is believed to be as follows: since the total width Wcₜₒₜₐₗ of the main grooves is sufficiently larger than the width Wd of the liquid discharging regulators, the flow velocity of the electrolytes can be higher while flowing through the liquid discharging regulators than while flowing through the main grooves, and the gases generated along with the electrochemical reaction can quickly flow toward the liquid discharging regulator side by being entrained in the flows of the electrolytes. It is found that, particularly with the testing samples C to F that satisfy that the width ratio Wc/Wd of the width Wc of the main grooves to the width Wd of the liquid discharging regulators is from 0.5 to 5, the cell resistivity of the RF batteries can be further decreased. The reason for this is believed to be as follows: since the width Wc of the main grooves is sufficiently larger than the width Wd of the liquid discharging regulators, the flow velocity of the electrolytes can be higher while flowing through the liquid discharging regulators than while flowing through the main grooves, and the gases generated along with the electrochemical reaction can quickly flow toward the liquid discharging regulator side by being entrained in the flows of the electrolytes. In contrast, when the Wc/Wd is smaller than 0.5 or larger than 5, the cell resistivity of the RF batteries is high. The reason for this is believed to be as follows: since the width Wd of the liquid discharging regulators is excessively larger than the width Wc of the main grooves in the testing sample B, the flow velocity of the electrolytes is lower while flowing through the liquid discharging regulators than while flowing through the main grooves, and accordingly, the gases at the electrodes accumulate at the electrodes instead of being successfully discharged, thereby the electrochemical reaction areas in the electrodes decrease. Another reason for this is believed to be as follows: since the width Wc of the main grooves of the testing sample B is excessively small, the flow resistance with the electrolytes increases. With the testing sample G, it is believed that, since the width Wc of the main grooves are excessively large, the electrochemical reaction areas in the electrodes decrease.

### Reference Signs List

1 redox flow battery (RF battery)
2, 2A, 2B cell frame
3, 3A, 3B bipolar plate
31 main groove 31i inlet 31o outlet
31a introducing-side main groove 31b discharging-side main groove
32 distributing groove (liquid supplying regulator)
33 gathering groove (liquid discharging regulator)
34 rib
4, 4A, 4B frame body
41 liquid-supplying-side piece 42 liquid-discharging-side piece 43 connecting piece
44 liquid supplying manifold 45 liquid discharging manifold
46 liquid supplying guide groove 47 liquid discharging guide groove
48 liquid supplying regulator 48s cut
49 liquid discharging regulator 49s cut
5 sealing member 5s sealing groove
100 battery cell
101 separation membrane
102 positive electrode cell 103 negative electrode cell
104 positive electrode 105 negative electrode
100P positive electrolyte circulation mechanism 100N negative electrolyte circulation mechanism
106 positive electrolyte tank 107 negative electrolyte tank
108, 109, 110, 111 duct
112, 113 pump
200 cell stack 200S sub-stack
210,220 end plate 230 connecting member

## Claims

1. A cell frame comprising:
a bipolar plate in contact with an electrode included in a battery cell; and
a frame body that surrounds a peripheral edge of the bipolar plate;
wherein the frame body has a liquid discharging manifold that allows an electrolyte to be discharged therethrough to an outside of the battery cell,
wherein the bipolar plate has a plurality of main grooves that are arranged in a surface of the bipolar plate on an electrode side and that allow the electrolyte to flow therethrough,
wherein at least one of the frame body and the bipolar plate has a liquid discharging regulator in which the electrolyte discharged from each of the main grooves is gathered, so that the electrolyte is guided toward the liquid discharging manifold, and
wherein, when a width of the main grooves is Wc, a total width Wcₜₒₜₐₗ of the plurality of main grooves is larger than a width Wd of the liquid discharging regulator in a direction perpendicular to an arrangement direction of the main grooves.

2. The cell frame according to Claim 1,
wherein a width ratio Wc/Wd of the width Wc of each of the main grooves to the width Wd of the liquid discharging regulator satisfies that Wc/Wd is from 0.5 to 5.

3. The cell frame according to Claim 1 or 2,
wherein the width Wd of the liquid discharging regulator satisfies that Wd is from 0.6 to 20 mm.

4. The cell frame according to any one of Claims 1 to 3,
wherein the width Wc of the main grooves satisfies that Wc is from 3 to 10 mm.

5. The cell frame according to any one of Claims 1 to 4,
wherein the liquid discharging regulator has a cut formed in the arrangement direction of the main grooves in the frame body, and
wherein outlets of the main grooves are provided so as to be continuous with the cut.

6. The cell frame according to any one of Claims 1 to 4,
wherein the liquid discharging regulator has a gathering groove formed in the arrangement direction of the main grooves in the bipolar plate so as to be continuous with outlets of the main grooves, and
wherein the frame body has a liquid discharging guide groove that communicates the gathering groove and the liquid discharging manifold with each other.

7. A cell stack comprising:
the cell frame according to any one of Claims 1 to 6.

8. A redox flow battery comprising:
the cell stack according to Claim 7.
